# EUROPEAN PATENT APPLICATION

(11) **EP 4 468 034 A1**
(43) Date of publication of application: **27.11.2024**
(21) Application number: 23175432.6
(22) Date of filing: 25.05.2023
(51) Int. Cl.: G01S 13/931, G01S 17/931, G01S 7/497, G01S 7/40, G01S 13/86, G01S 17/86

(54) **ONLINE CALIBRATION OF A SENSOR**

(71) Applicant: Aptiv Technologies AG, 8200 Schaffhausen (CH)
(72) Inventor: TORRES, Felipe, 40723 Hilden (DE)
(74) Representative: Bardehle Pagenberg Partnerschaft mbB Patentanwälte Rechtsanwälte

(57) **Abstract**

The present disclosure relates to a computer-implemented method for updating a calibration of one or more sensors in a vehicle, the method comprising the steps of: obtaining sensor data from the one or more sensors; determining a ground truth value based on at least a part of the sensor data and on one or more vehicle operation parameters; determining calibration update data based on the ground truth value; and updating the calibration using the calibration update data. In addition, the present disclosure relates to a corresponding apparatus, a computer program as well as to a vehicle.

## Description

### Field of the invention

The present disclosure relates to a computer-implemented method, an apparatus, an apparatus in a vehicle, and a computer program for updating a calibration of one or more sensors.

### Background

Nowadays, vehicles (cars, ships, robots etc.) are oftentimes operated using vehicle assistance systems (e.g., such as an Advanced Driving Assistance Systems (ADAS)) to provide some degree of driving assistance to the driver. Additionally, the vehicle assistant system may also be able to control a vehicle semi-autonomously or even fully autonomously. This requires that the vehicle assistant system has sufficient knowledge of its surroundings, in particular of obstacles such as other vehicles, pedestrians etc. to avoid collisions and allowing the vehicle to navigate safely through its surrounding environment. Oftentimes LiDAR or radar sensors are used to obtain the required data to determine objects, to estimate their velocities or to classify the surrounding in the environment of a vehicle.

While LiDAR sensors have been the go-to sensor for automotive applications for many years, since radars or radar sensors are relatively inexpensive, have a long range and are less weather dependent than other sensors, using radar sensors has seen a growth in popularity. However, in view of the recent increase in popularity, optimizing radar sensors and their applications have seen an increase in interest.

One aspect of radar sensors that requires further development is the calibration of the radar sensors. Typically, radar sensors are calibrated in the plant before they are sold. If the radar sensors are, for example, mounted on a vehicle, one manufacturing step of the vehicle is calibrating the radar sensors in the manufacturing line. However, once the vehicle is sold and used by consumers, recalibrating the sensors is difficult. Moreover, if parts of the vehicle are replaced or damaged, recalibration of the sensors may be necessary.

Against this background, an object of the present invention is to provide a method for updating the calibration of one or more sensors, preferably of one or more radar sensors on-line, without requiring a dedicated laboratory or a workshop.

### Summary of the invention

Aspects of the present disclosure are set out in the accompanying independent and dependent claims. Combinations of features from the dependent claims may be combined with features of the independent claims as appropriate and not merely as explicitly set out in the claims.

In an aspect, the invention relates to a computer-implemented method for updating a calibration of one or more sensors in a vehicle. Sensor data may be obtained from the one or more sensors. Furthermore, the method may comprise the step of determining a ground truth value based on at least a part of the sensor data and on one or more vehicle operation parameters. The method may further comprise the step of determining calibration update data based on the ground truth value. The method may also comprise updating the calibration using the calibration update data.

With the above, it is possible to determine that the current calibration of the one or more sensors require adjustment (by using the ground truth value obtained using at least a part of the sensor data and vehicle operation parameter(s)), and to update the current calibration of the one or more sensors accordingly. This improves the reliability of the system. In particular, by including such a determination means into the vehicle it is possible to avoid extensive recalibration in a laboratory environment/workshop environment which is cumbersome for the owner of the vehicle.

In a further aspect, the method further comprises determining one or more targets in a surrounding of the vehicle based on the sensor data, wherein the one or more targets are determined by considering sensor data having a high signal to noise ratio, SNR.

In a further aspect, the method further comprises determining one or more target parameters of the one or more targets in the surrounding of the vehicle based on the sensor data. Furthermore, the method may comprise the step of determining the ground truth value based on the one or more target parameters of the target in the surrounding of the vehicle.

By determining one or more targets in the surrounding of the vehicle, and in particular by deter mining the ground truth value based on the determined target, the computational complexity of updating the calibration of the one or more sensors can be reduced, as only the data associated with the target is considered.

In a further aspect, the vehicle operation parameters include on one or more of a position of the one or more sensors in the vehicle, a velocity of the vehicle and a yaw rate of the vehicle.

In another aspect, the calibration update data is determined based on sensor data reflected from the one or more targets in the surrounding of the vehicle.

In a further aspect, the reflected sensor data corresponds to a steering vector associated with the one or more targets and the one or more sensors.

In yet another aspect, the target parameters comprise one or more of a range of the target, a range rate of the target relative to the vehicle, based on the vehicle operation parameters and the sensor data, preferably based on a corresponding vector of complex values from information included in the sensor data associated with different virtual antenna channels, more preferably based on the target parameters.

In a further aspect, the target parameters comprise on one or more of a position of the target, a velocity of the target and a yaw rate of the target, relative to the vehicle, based on the vehicle information.

In another aspect, updating the calibration further comprises updating the calibration by applying an algorithm onto only a portion of the data of the calibration using the calibration update data.

In a further aspect, the algorithm is applied by a trained machine learning model.

By using a trained machine learning model to update the calibration improves the reliability of the resulting updated calibration and reduces the computational complexity, as this avoids using typical computer intense matrix-calibration calculations.

In another aspect, the machine learning model is trained by a computing means included in the vehicle.

With the above, it is possible to tailor the updating of the calibration to the particular vehicle including the one or more sensors.

In a further aspect, the machine learning mode is trained by a remote computing means.

With the above, it is possible to include data obtained from additional data sources to enhance the resulting trained machine learning model, improving the reliability.

In yet another aspect, the ground truth value and/or the calibration update data is received from a remote server.

With the above, the required computing power included in the vehicle can be reduces, as the calculations for obtaining the ground truth value and/or the calibration update data can be performed remotely.

In a further aspect, the method further comprises determining whether the updated calibration is associated with a reference value, and if the updated calibration is not associated with the reference value, repeating updating the calibration using the sensor data.

By comparing the updated calibration with a predetermined reference value, reliability of the updated calibration of the one or more sensors can be determined.

In another aspect, the method further comprises determining an operating instruction for the vehicle based on the updated calibration affecting a function of a vehicle assistance system, wherein the function preferably comprises: if it is determined that the calibration is not associated with the reference value, triggering a warning; and after the calibration is updated, updating the warning.

With the above, the security of the vehicle can be improved, as the driver of the vehicle will be notified when the one or more radar sensors operate unreliably.

Another aspect of the invention is directed to an apparatus comprising means configured to perform the above-presented method.

A further aspect of the invention relates to a computer program comprising instructions, which when executed by a computing system, causing the computing system to perform the above-described method.

Yet another aspect of the invention relates to a vehicle comprising an apparatus configured to perform the above-described method.

### Brief description of the drawings

Various aspects of the present invention are described in more detail in the following by reference to the accompanying figures without the present invention being limited to the embodiments of these figures.
Fig. 1a illustrates a typical setup for updating a calibration.
Fig. 1b illustrates the method for updating the calibration according to the present invention.
Fig. 2 shows a flow diagram of updating the calibration of the sensors according to an embodiment.
Fig. 3 shows a vehicle performing the method for updating the calibration of the sensors.
Fig. 4 shows a system to update the calibration of sensors remotely according to an aspect of the present invention.
Fig. 5 shows a system comprising means configured to perform the method for updating the calibration of the sensors.
Fig. 6 shows a vehicle according to aspects of the present invention.

### Detailed Description

In the following, aspects of the present invention are described in more detail with reference to the figures.

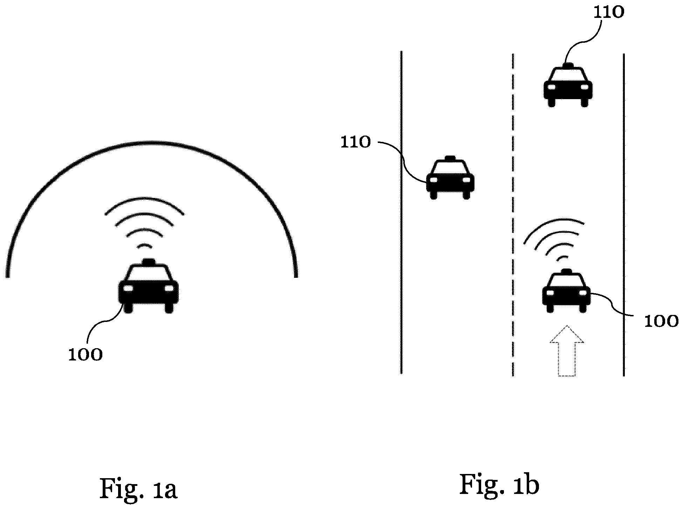

In Fig. 1a, a typical setup for updating a calibration of one or more sensors is shown.

One or more sensors, being one or more of one or more camera sensors 372, one or more LiDAR sensors 376 and/or one or more radar sensors 374 are mounted on a vehicle 100. For reliability reason, when used in a vehicle, the one or more sensors 370 are typically calibrated and/or aligned. Calibration of the sensors typically refers to calibration of the individual sensors (with regards to phase/magnitude of the signal), wherein alignment typically relates to alignment of the one or more sensors in the vehicle. In the following, calibration is used to refer to any calibration/alignment process used to make sure that the sensors function in a reliable manner.

Typically, the one or more sensors 370 are mounted to the vehicle 100 during the manufacturing of the vehicle 100. For example, one manufacturing step of the vehicle 100 may be mounting/inserting the one or more sensors 370 on the vehicle. When being used in the vehicle 100, the one or more sensors 370 may already have an initial calibration. Preferably, the initial calibration is a calibration matrix including information for transforming a complex signal vector to compensate magnitude and/or phase offsets of the one or more sensors 370. In some examples, the one or more sensors 370 are mounted on the vehicle 100 before having received the initial calibration. The initial calibration of the one or more sensors 370 it is mostly performed in a laboratory environment over the whole FOV (Field of View). For example, after the manufacturing of the vehicle 100, the calibration may be performed in a separate laboratory for performing the calibration of the one or more sensors 370, as illustrated in Fig. 1a. In another example, the calibration of the one or more sensors 370 is performed during manufacturing of the vehicle 100 in the process line. Preferably, the one or more sensors 370 receive the initial calibration after the respective parts where the one or more sensors 370 are mounted is fully manufactured, as changing the respective parts may induce an unwanted change of the calibration of the one or more sensors 370. In further examples, the one or more sensors 370 are mounted after the vehicle 100 has been manufactured. For example, an owner of the vehicle 100 may device to install the one or more sensors 370 after having bought the vehicle 100. In such examples, the one or more sensors 370 installed after having bought the vehicle 100 may already have the initial calibration or be calibrated at a laboratory, such as in a workshop, to receive the initial calibration. Similarly, in even further examples, the vehicle 100 may have been issued to a workshop due to damage to the vehicle 100. In such examples, it may also be beneficial to (re-)calibrate the one or more sensors mounted in the vehicle 100.

In Fig. 1b an exemplary method for calibrating the one or more sensors is illustrated. Preferably, the one or more sensors are being calibrated after having received the initial calibration. In a first step, the computing means 300 may obtain sensor data from the one or more sensors 370.

The sensor data obtained from the one or more sensors 370 may include imaging data obtained from the one or more cameras or one or more LiDAR sensors and/or radar data obtained from the one or more radar sensors. In one embodiment, the one or more sensors 370 may include multiple radar sensors that form a radar antenna array, preferably a MIMO radar antenna array. The radar antenna array comprises of multiple radar sensors located closely to each other to obtain an improved spatial resolution, Doppler resolution and dynamic range. Each of the one or more radar sensors in the radar antenna array transmit orthogonal signals that are received by corresponding antennas that extract the obtained waveforms using corresponding filters. This allows to increase the amount of theoretical radar antennas without having to increase the amount of actual hardware radar antennas. In the art, this is also referred to as virtual antenna array (X transmitting radar antennas and Y receiving radar antennas form X*Y virtual radar antennas). Using the information obtained by each of the X*Y virtual antennas, the special resolution can be improved. The sensor data includes information on one or more objects 110, 120 in the surrounding of the vehicle 100. The sensor data may include a range information associated with the one or more objects 110, 120, a range rate information associated with the one or more objects 110, 120, preferably relative to the vehicle 100. The one or more objects 110, 120 may be any object that can be present in the surrounding of the vehicle 100. Preferably, the one or more objects 110, 120 are one or more other vehicles 110 in the surrounding of the vehicle 100 or one or more specific objects 120 in the surrounding of the vehicle 100. For example, the specific objects 120 may be signs adjacent to a road or significant objects such as trees or landmarks that the vehicle 100 passes when driving. The one or more significant objects may also be calibrating objects, such as reference signs designed to facilitate/enable calibration of the one or more sensors 370.

When the sensor data is radar data obtained from the one or more radar sensors 374, the sensor data includes one or more of angle, velocity, and/or doppler information of the one or more objects 110, 120 in the surrounding of the vehicle 100.

Based on the sensor data, the computing means determines a ground truth value. The ground truth value may indicate a reference for calibrating the one or more sensors. The ground truth value may also indicate the quality/reliability of the calibration of the one or more sensors 370. The ground truth value may be determined based on at least part of the sensor data and on one or more vehicle operation parameters. The one or more vehicle operation parameters include information on the vehicle speed, the vehicle position and the vehicle yaw rate.

Additionally or alternatively, based on the sensor data, one or more targets in the surrounding of the vehicle may be determined, wherein the one or more targets are determined by considering sensor data having a high signal to noise ratio, SNR. The one or more targets may be one or more of the one or more objects 110, 120 in the surrounding of the vehicle 100. After the one or more targets in the surrounding of the vehicle 100 have been determined, based on the sensor data and the vehicle operation parameters, one or more target parameters of the one or more targets may be determined. In some embodiments, the target parameters include a range information associated with the one or more targets, a range rate information associated with the one or more target relative to the vehicle 100, preferably the target parameters are determined based on the vehicle operation parameters and a corresponding vector of complex values from information associated with different virtual antenna channels included in the sensor data. Additionally or alternatively, the target parameters include on one or more of a position of the target, a velocity of the target and a yaw rate of the target, relative to the vehicle. Based on the one or more target parameters, the sensor data and the one or more vehicle operation parameters, the ground truth value may be determined.

Based on the ground truth value, the computing means 300 may determine that the calibration of the one or more sensors 370 appears not to be reliable. This may be the case where the calibration has substantially changed compared to the initial calibration of the one or more sensors 370. Accordingly, there is a need to adjust the calibration. In some examples the calibration is similar to the initial calibration of the one or more sensors 370. In cases where the calibration is similar to the initial calibration, the computing means may determine that there is no need to update the calibration.

After determining the ground truth value, the computing means 300 may determine calibration update data based on the ground truth value. Preferably, the computing means 300 also determines the calibration update data based on sensor data reflected from the one or more targets in the surrounding of the vehicle, wherein preferably the reflected sensor data corresponds to a steering vector, or to a matrix of steering vectors associated with the one or more targets and the one or more sensors.

Based on the calibration update data, the computing means 300 may update the calibration of the one or more sensors 370. The calibration may be updated by applying an algorithm that facilitates such an operation. Preferably, the calibration is updated by applying the algorithm onto only a portion of the data of the calibration using calibration update data. The algorithm preferably being based on a numerical optimization algorithm.

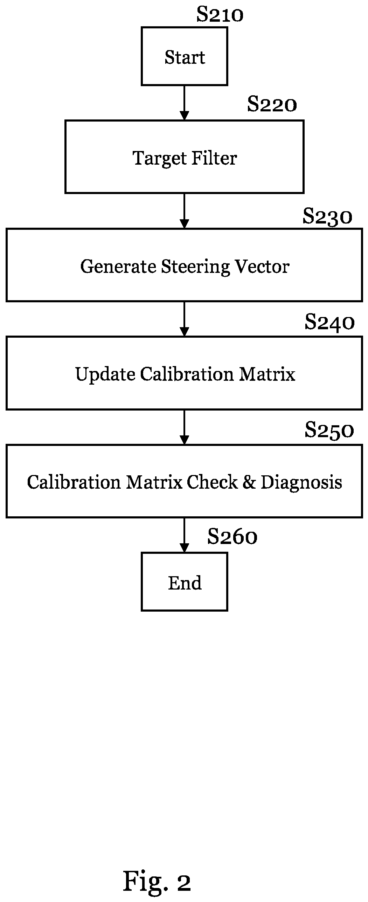

In Fig. 2, aspects of the method described in the above examples are described in more detail. Each of the steps described with reference to Fig. 2 may be included to the examples described above additionally or alternatively.

In step S210, the computing means 300 initiates the calibration process. The calibration process may be initiated whenever operation of the vehicle is initiated. For example, when a user starts the vehicle to perform a drive operation, the computing means 300 may initiate the calibration process. In some examples, the computing means 300 may initiate the calibration process based on a determination that a calibration may be necessary. The determination may be based on the passing of a certain time interval (such as every 6 months, preferably every month, more preferably every week, and most preferably every day), a determination that a difference between the initial configuration and the calibration is above a predefined threshold, a determination that an accident occurred, a determination that a car part has been replaced, a determination that an external signal indicates initiation of the calibration and/or a determination that a change in certain climate conditions occurred. If it is determined that the calibration may be necessary, a notification may be issued to the user of the vehicle, preferably as a sound/visual notification using an Advanced driver-assistance systems (ADAS).

In a step S211 (not shown), the computing means 300 receives one or more vehicle operation parameters. The one or more vehicle operation parameters may include information on the arrangement of the one or more sensors 370, such as the spacing and respective angle between individual sensors 370 of the one or more sensors 370, on the vehicle speed, on the vehicle jaw rate, and on other functional parameters associated with the vehicle 100 and/or the one or more sensors 370. In addition to the one or more vehicle operation parameters, the computing means 300 may also obtain the information associated with first calibration of the one or more sensors 370 and of the initial calibration of the one or more sensors 370 and/or any previous calibrations of the one or more sensors 370. For example, the one or more vehicle operation parameters may further include the initial calibration matrix, the 0° calibration matrix and/or sector calibration matrices associated with the one or more sensors 370. The one or more vehicle operation parameters and the initial calibration of the one or more sensors 370 are considered as part of input parameters for updating the calibration of the one or more sensors 370.

Subsequently, the computing means 300 obtains sensor data from one or more sensors having the calibration.

In step S220, the computing means 300 determines the one or more targets in the surrounding of the vehicle by filtering the sensor data. Preferably, the targets are determined by considering sensor data having a high signal to noise ratio (SNR), which is well suited for identifying a single target. To facilitate single target determination, the computing means 300 may obtain description information, such as the dimensions of potential ones of the one or more targets. With the description information, single target determination may be confirmed. Moreover, based on the radar mounting position and the one or more vehicle operation parameters, the target parameters, such as the target's speed, position and yaw rate may be determined.

In addition, during determination of the one or more targets in the surrounding of the vehicle, the computing means 300 may determine, based on the sensor data, that an expected portion of the sensor data is missing. Based on this determination, the computing means 300 may request further sensor data and/or initiate updating the one or more sensors.

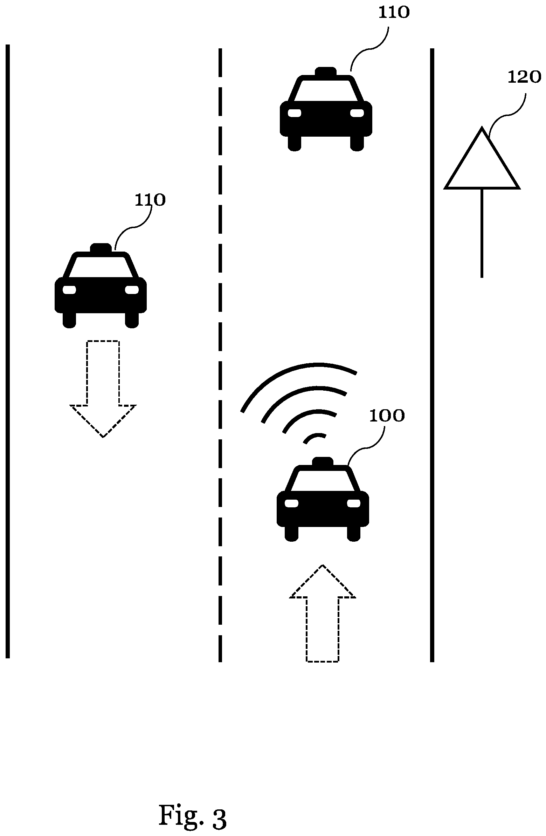

In Fig. 3, a typical environment for target filtering is illustrated. In the example shown in Fig. 3, the vehicle 100 drives on a road, wherein two other vehicles 110 and a landmark 120 are present in the surrounding of the vehicle. Based on the sensor data, the computing means 300 may determine the object information associated with the objects 110, 120 including one or more of current position information, current velocity information, and/or current jaw rate information of the one or more objects 110, 120 in the surrounding of the vehicle 100. Based on the object information, the computing means 300 may determine, which one of the one or more objects 110, 120 is best suited for determining the ground truth. In some examples, the computing means 300 determines that moving objects are better suited for determining the ground truth when compared to static objects. In the scenario shown in Fig. 3, the computing means 300 may determine that the vehicle 110 driving on the same lane as the vehicle 100 is a good candidate for the target filtering. That is, the computing means 300 may determine that moving objects are better suited for determining the ground truth, when compared to static objects, and it can be expected that the vehicle 110 driving in the same lane will be present for a relatively long period of time (in particular when compared to the vehicle 110 driving in the opposite direction as the vehicle 100) and with a relatively low change in relative velocity to the vehicle 100. This allows to estimate the expected object information more reliable and thus to determine the ground truth more reliable, when compared to the vehicle 110 driving in the opposite direction, as this vehicle 110 will only be available for such an estimation/determination for a short period of time. In particular, since the vehicle 110 driving in the same direction as the vehicle 100 will be available for multiple sensor data measurements that can be provided to the computing means 300.

In a step S221 (not shown), the computing means 300 may determine whether the single target is sufficiently determined. If this is not the case, the computing means 300 may repeat the target filter step. That is, the computing means 300 may either consider another object of the one or more objects 110, 120, or start again by obtaining new sensor data. Otherwise, if the computing means 300 determines that the target is sufficiently determined, the computing means 300 may continue with updating the calibration.

Returning to Fig. 2, in step S230, based on the target, the vehicle information and the sensor data, a steering vector of the one or more sensors 370 is determined. Preferably, the individual position of individual ones of the one or more sensors 370, By considering the target parameters, the one or more vehicle operation parameters and the sensor data, the steering vector (or a steering vector matrix) of the one or more sensors 370 associated with one or more targets, such as objects 110, 120 in the surrounding of the vehicle 100 may be determined.

Using the information obtained in the preceding steps, the computing means 300 determines the ground truth value as set forth with respect to Fig. 1b.

Subsequently, in step S240, the computing means 300 updates the calibration using the calibration update data. Preferably, the computing means updates a calibration matrix associated with the one or more sensors 370. The calibration matrix includes information related to magnitude and phase offsets in the sensor data when compared to an expect result related to the initial calibration. The calibration update data is determined based on the ground truth value and the steering vector data obtained in step S230, wherein preferably, only a portion of the calibration matrix associated with the calibration is updated.

Preferably, the calibration matrix is updated using an algorithm. The algorithm may be based a numerical optimization of a linear algebraic update of the calibration matrix. Preferably, by considering the information included in the steering vector associated with the one or more sensors 370 and the ground truth value.

In some embodiments, the algorithm relates to a machine learning engine. Preferably the machine learning model is trained using the input parameters and the sensor data. The machine learning algorithm may be trained using the computing means 300 or a remote computing means that is in communication with the computing means.

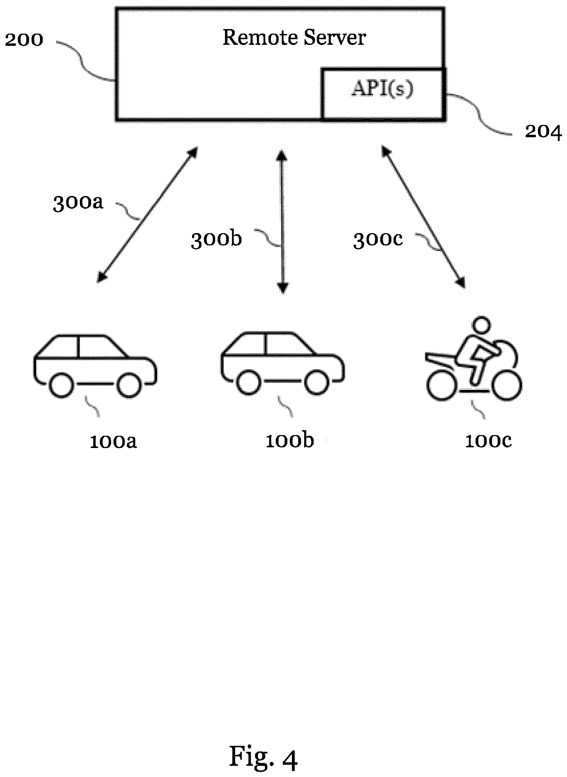

In Fig. 4, an example is shown where the computing means 300 receives data, such as the trained machine learning model, from the remote computing means using a remote server 200. The server 200 may also receive data transmitted from the vehicle 100. The server 200 may transmit the data from/to the vehicle 100 using an API 204. The data may comprise the sensor data, the initial calibration matrix, an updated calibration matrix obtained after updating the calibration matrix, the vehicles' orientation, the vehicles' position, the vehicles' velocity, and/or the trained machine learning model.

In one example, the vehicle 100 may transmit sensor data, which is used at the remote computing device 300 for training a machine learning model that can then be transmitted to the vehicle 100 for updating the calibration. Preferably configured to perform the updating step (S140) as well as a determination when to update the calibration.

In another example, the computing device 300 may transmit data associated with the calibration and/or the initial calibration of the one or more sensors 370 to the remote computing device, such that the remote computing device may train/adjust a machine learning model such that it is particularly trained for updating the calibration, such that updating the calibration is optimized. Preferably, a plurality of computing devices 300a, 300b and 300c associated with a plurality of corresponding vehicles 100a, 100b, 100c transmit/receive data to/from the remote server 200. This allows to increase the amount of data at the remote server 200 such that the remote computing device can train the machine learning model optimally. Furthermore, one trained machine learning model (or other data) may be transmitted from one server to the plurality of vehicles 100a, 100b, 100c.The data transmitted between the server 200 and the vehicle 100 may be transmitted in regular intervals through wireless communication, or whenever the vehicle is at a service station/workshop.

In another example, the above-described transmission of data from the plurality of vehicles 100a, 100b, 100c may be used to improve calibration of the one or more sensors 370 of the vehicle 100a. For example, sensor data from the plurality of vehicles 100a, 100b, 100c associated with the vehicle 100 may be used to improve the calibration. That is, the sensor data from the plurality of vehicles 100a, 100b 100c associated with the vehicle 100 may be used to improve single target determination by improving determination of the target data and/or the vehicle information. For example, the position, orientation and velocity of the target and/or the vehicle 100 may be determined based on the sensor data from the plurality of vehicles 100a, 100b 100c associated with the vehicle 100.

While the above is described with respect to communication via the remote sensor, the sensor data from the plurality of vehicles 100a, 100b 100c and the sensor data from vehicle 100 (and other data from vehicle 100) may also be directly communicated between vehicle 100 and the plurality of vehicles 100a, 100b, 100c.

The skilled person will understand that an of the above examples and embodiments described with respect to vehicle 100 may also apply to vehicle 100a, 100b and 100c.

Returning to Fig. 2, after the calibration matrix is updated using the algorithm, it is determined whether the method steps until this point have provided sufficient information/data such that it can be expected that updating the calibration was successful. Otherwise, the process may be repeated starting with step S210, or ended, wherein if the process is ended due at this point, the notification to the user of the vehicle 100 may be issued. In this case, the notification may include a warning that the one or more sensors 370 require further calibration.

In step S250, a diagnosis step is performed for checking whether the updated calibration matrix has improved the reliability of the one or more sensors 370. This means that the ground truth value of the updated calibration indicates a good calibration. For this a reference value may be determined that indicates the reliability of the calibration. For example, certain reference measurements may be performed and a deviation threshold of an expected reference measurement to the actual reference measurement may be associated with the reference value. In some examples, the diagnosis step may be performed by comparing between the calibration matrices of the calibration and the updated calibration and/or the initial calibration using cross correlation. The reference value may be determined based on the result of using the cross correlation to determine the reference value, such that the reference value indicates a reliability of the one or more sensors 370 with respect to the phase of the sensor data. Additionally, or alternatively the quality of the calibration (reliability) may be determined using the Frobenius norm of calibration matrix with respect to the determined ground truth value. Using the Frobenius norm, the reliability of the one or more sensors 370 with respect to the magnitude of the sensor data may be determined. Additionally, comparing an angle error and a correlation error at different angles for different ground truth targets using the calibration matrix and the updated calibration matrix can be used to determine the improvement obtained by updating the calibration matrix. That is, for individual angles ranges of the total field of view (i.e., for subsets of the total angle of view) of the one or more sensors 370, target determinations and ground truth determinations are performed for updating the calibration matrix. Based on this information the angle errors and correlation errors may be determined, As outlined above.

In step S260, the updated calibration is applied to the one or more sensors 370. In addition, each of the respective information gained during the updating process may be stored on the vehicle 100 and/or transmitted to the remote server/computing device. In some examples, the information obtained in the preceding steps may be used to update/improve the trained machine learning model.

Preferably, the above method for updating the calibration of the one or more sensors is performed for only a portion of the field-of-view of the one or more sensors 370. By performing the above method for only the portion of the field-of-view, the calibration may be updated more efficiently, and the reliability of the update may increase. In some examples, it may be beneficial to perform the above method multiple times to cover the whole field-of-view of the vehicle 100.

By applying the above method in the ADAS, the ADAS may perform the updating the calibration of one or more sensors in a vehicle, as described above. Accordingly, the vehicle assistance system may trigger one or more actions. Such actions may be any action performed by ADAS, in particular, in view of the calibration of sensors. That is, the ADAS may determine an operating instruction for the vehicle based on the determined velocity of the object affecting a function of a vehicle assistance system, wherein the function preferably comprises: if it is determined that that the calibration is not associated with a reference value, triggering a warning, and after the calibration is updated using the sensor data, updating the warning.

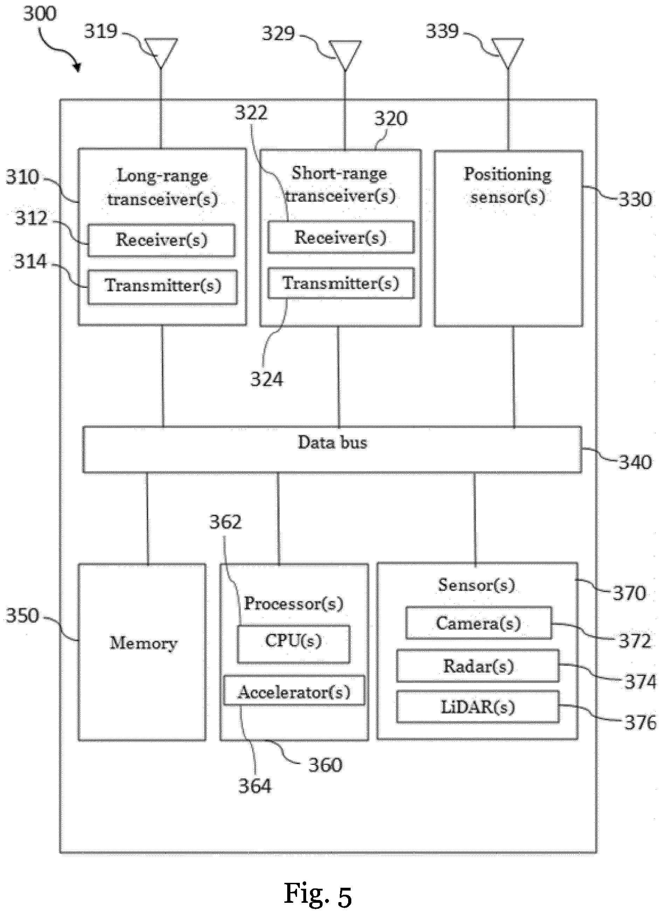

In Fig.5, an exemplary computing device 300 is illustrated. The computing device 300 may comprise one or more long-range transceivers 310, including one or more receivers 312 as well as one ore more transmitters 314. The one or more transceivers are configured to transmit/receive data. Preferably, transmit/receive data to/from the server 200. The computing device 300 may also comprise one or more short-range transceivers 320, configured to transmit/receive data in short range. The one or more short-range transceivers 320 may comprise one or more receivers 322 as well as one or more transmitters 324. The one or more short-range transceivers may also comprise a wired-communication interface, configured to transmit/receive data through wired communication, such as LAN, USB etc. Moreover, for estimating the current position of the vehicle 100, the computing means 300 may also comprise one or more positioning sensors 330. The one or more position sensors 330 may be configured to transmit/receive GPS, Galileo, Glonass, Beidou and IRNSS data for determining the current position of the vehicle 100. Each of the one or more long-range transceivers, the one or more short-range transceivers and the one or more positioning sensors comprise an antenna 319, 329, 339 for transmitting/receiving data. Additionally, the computing means may comprise a data bus 340 configured to transport the data inside the computing means. For example, the data bus 340 may be configured to transport data from the one or more positioning sensors 330 to the memory 350. The computing means 300 further comprises one or more processors 360, such as one or more CPUs 362 and/or one or more accelerators 364, configured to compute instructions to perform any of the above-described methods. Moreover, as indicated above, the computing means 300 may also comprise the one or more sensors 370, such as the one or more cameras 372, the one or more radars 374 and/or the one or more LiDARs 376. In some examples, the one or more sensors 330, 370 and/or the one or more transceivers 310, 320 are not part of the computing means 300, but in communication with the computing means 300.

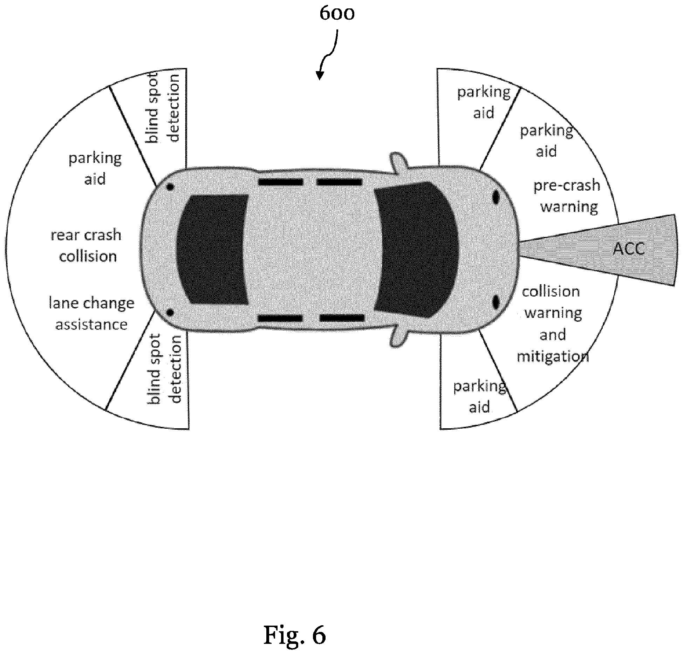

An example vehicle 600 comprising an ADAS as mentioned above, and corresponding applications are depicted in Fig. 6. In this example, the vehicle 600 is a car. However, in other examples, the vehicle may be any one of a ship, a drone, a robot or other vehicles that may benefit from considering the environment in their respective actions/operations.

In an example, the ADAS may be configured to execute the method described above. For example, the ADAS may consider the information obtained by the above method, for example by using a calibrated radar, to control the vehicle. One exemplary application is a Stop & Go function for the vehicle, for example, for a robot in a manufacturing plant such that collisions with other robots or persons are avoided. Furthermore, in the example of the robot in the manufacturing plant, providing a collision warning to surrounding other vehicles or persons in the surrounding of the robot may be crucial for safety and avoiding collisions. Another potential application for the above is a pre-crash warning. This may be particularly critical in a vehicle such as a car, for example in a traffic accident situation where the pre-crash warning may trigger security relevant applications such as an airbag to avoid harm to the driver. Moreover, another potential application is to aid a driver of a car in a parking operation. For this, the information obtained may be used for blind spot detection or as a general parking aid, to facilitate the parking. Moreover, the information may also be used to assist a driver in changing the lane either by triggering a warning or performing the lane change automatically.

The method according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

### Reference sign list

- 100: Vehicle
- 100a: Vehicle
- 100b: Vehicle
- 100c: Vehicle
- 110, 120: Objects
- 200: Remote server
- 204: API(s)
- 300: Computing means
- 300a: Computing means
- 300b: Computing means
- 300c: Computing means
- 310: Long-range transceiver(s)
- 312: Long-range receiver(s)
- 314: long-Range transmitter(s)
- 319: Antenna
- 320: Short-range transceiver(s)
- 322: Short-range receiver(s)
- 324: Short-range transmitter(s)
- 329: Antenna
- 330: Positioning sensor(s)
- 330: Antenna
- 340: Data bus
- 350: Memory
- 360: Processor(s)
- 362: CPU(s)
- 364: Accelerator(s)
- 370: Sensor(s)
- 372: Camera(s)
- 374: Radar(s)
- 376: LiDAR(s)
- 600: Vehicle

## Claims

1. A computer-implemented method for updating a calibration of one or more sensors in a vehicle, the method comprising the steps of:
obtaining sensor data from the one or more sensors;
determining a ground truth value based on at least a part of the sensor data and on one or more vehicle operation parameters;
determining calibration update data based on the ground truth value; and
updating the calibration using the calibration update data.

2. The method according to the preceding claim, wherein determining the ground truth value further comprises:
determining one or more targets in a surrounding of the vehicle based on the sensor data, wherein the one or more targets are determined by considering sensor data having a high signal to noise ratio, SNR.

3. The method according to the preceding claim, wherein determining the ground truth value further comprises:
determining one or more target parameters of the one or more targets in the surrounding of the vehicle based on the sensor data; and
determining the ground truth value based on the one or more target parameters of the target in the surrounding of the vehicle.

4. The method according to any one of the preceding claims, wherein the vehicle operation parameters include one or more of a position of the one or more sensors in the vehicle, a velocity of the vehicle and a yaw rate of the vehicle.

5. The method according to claims 2 or 3, wherein the calibration update data is determined based on sensor data reflected from the one or more targets in the surrounding of the vehicle.

6. The method according to the preceding claim, wherein the reflected sensor data corresponds to a steering vector associated with the one or more targets and the one or more sensors.

7. The method according to claim 3, wherein the target parameters comprise one or more of a range of the target, a range rate of the target relative to the vehicle, based on the vehicle operation parameters and a corresponding vector of complex values from information included in the sensor data associated with one or more virtual antenna channels.

8. The method according to any one of the preceding claims, wherein updating the calibration further comprises:
updating the calibration by applying an algorithm onto only a portion of the data of the calibration using calibration update data.

9. The method according to the preceding claim, wherein the algorithm is applied by a trained machine learning model.

10. The method according to any one of the preceding claims, further comprising:
receiving the ground truth value and/or the calibration update data from a remote server.

11. The method according to any one of the preceding claims, further comprising:
determining whether the updated calibration is associated with a reference value; and
if the updated first calibration is not associated with the reference value, repeating updating the calibration using the sensor data.

12. The method according to the preceding claim, further comprises:
determining an operating instruction for the vehicle based on the updated calibration affecting a function of a vehicle assistance system, wherein the function preferably comprises:
if it is determined that the calibration is not associated with the reference value, triggering a warning; and
after the first calibration is updated, updating the warning.

13. An apparatus comprising means configured to perform the method of any of the claims 1 to 12.

14. A computer program comprising instructions, which when executed by a computing system, causing the computing system to perform the method of any of the claims 1 to 12.

15. A vehicle comprising an apparatus according to claim 13.
